# EUROPEAN PATENT SPECIFICATION

(11) **EP 1 382 426 B1**
(45) Date of publication and mention of the grant of the patent: **28.02.2007**
(21) Application number: 03101633.0
(22) Date of filing: 05.06.2003
(51) Int. Cl.: B29C 33/42, B29D 30/06, B60C 13/00, B29D 30/72, B29L 30/00

(54) **Tire mold for reflective tires and tire**
Reifenwerkzeug für reflektive Luftreifen und Reifen
Moule pour pneumatiques réfléchissants et pneumatique

(30) Priority: 14.06.2002 US 388995 P
(43) Date of publication of application: 21.01.2004
(73) Proprietor: THE GOODYEAR TIRE & RUBBER COMPANY, Akron, Ohio 44316-0001 (US)
(72) Inventor: Stubbendieck, Kent Alan, Wadsworth, OH 44281 (US); White, John Richard, Wadsworth, OH 44281 (US)
(74) Representative: Kutsch, Bernd

(56) References cited:
- US-A- 1 776 145
- US-A- 3 177 558
- US-A- 4 444 713
- US-A- 4 492 554
- "Datasheet "Magnaplate HMF""[Online] XP002316410 Retrieved from the Internet: URL:http://www.magnaplate.com/coatings/mag naplatehmf.html> [retrieved on 2005-02-04]

## Description

### Technical Field

This invention relates to tires generally. More particularly it relates to a tire mold for the manufacture of light reflection surfaces along the outer surfaces of tires and to a tire having a surface finish formed by said mold.

### Background of the Invention

Tires are produced using a variety of materials including steel synthetic cords and a variety of natural and synthetic rubbers with a blend of other materials such as sulfur, carbon black, silica and various curing agents and antioxidants.

The tires are assembled using a variety of techniques which results in a finished product commonly referred to as a "green" or uncured tire.

This green or uncured assemblage of tire components is then placed in a mold and cured under pressure and elevated temperatures in a process commonly referred to as vulcanization.

During curing the rubber components create bonds at the molecular level linking in a non-reversible way to a cured state resulting in a product having rubber set in a particular shape as dictated by the mold cavity.

The mold cavity has a radially outer crown area for forming the tread. This crown area has a plurality of ribs and blades for forming grooves. Interspersed between these groove forming ribs, the tread elements of the tire are formed.

Along each side of the lateral extending extremes of the mold crown area are sidewall forming surfaces that extend radially inwardly from the tread forming crown toward the beads of the tire. The sidewall forming portions of the mold impart all the indicia and lettering as well as ornamental rings and ridges that give the tire sidewall appearance.

The manufacturer's name and associated trademarks are displayed in these sidewall surfaces.

Often, and in most cases, the sidewalls are formed as a singular annular ring on each side of the tire.

The manufacturers have gone to great extremes to make these sidewalls have a visually striking appearance.

The use of colored or white sidewall rings of outlined white lettering provide visual contrast.

The shape of ridges can be altered to change the light reflecting quality of black sidewall tires. Michel Clementz of The Goodyear Tire & Rubber Company patented a unique way of aligning ridges to create an appearance of light reflecting surfaces and light absorbing surfaces depending on the observer's relative position as he observed the tire's sidewall. This invention, described in US-A- 5,303,758, created a relatively economical way to achieve a visually striking contrast on an otherwise all black tire surface.

The primary limitation of such a concept was the fact that the appearance change from bright to dull or reflective to light absorbing as one's perspective changed relative to the tire. What this meant in practical terms was the company's name or trademark only could be about 90° or less around a tire if the appearance was to stand out. Uniform contrast was in fact practically impossible to achieve and any direct or normal view greatly limited the visual effect. This meant that only if the observer would stand at an angle relative to the sidewall would the contrasting feature be truly observable.

In US-A1- 2001/0051677, Francois Bataille et al. disclose a tire, the sidewalls of which contain a varnished film. This patent application retards the visible effects of the migration of antioxidants and antiozonants by employing a unique rubber in the sidewalls. This specific rubber compound provides a thin film at the molded surface.

US-B- 4,444,713 discloses a tire having an indicium on its sidewall surface with a surface finish of less than 0.254 microns.

US-B- 4,492,554 describes a tire mold section having vents being movable to a vent closing position forming a smooth surface continuous with an inner surface of a tire cavity.

The present invention achieves a highly light reflective surface on a tire sidewall in a novel way. The resultant tire has highly light reflective surfaces achieved in a way that is clearly recognizable regardless of the observer's relative position.

The present invention achieves a higher reflective surface on a black sidewall tire or any colored surface using a highly cost efficient method of manufacture.

The present invention requires no alteration of present manufacturing and is compatible with the curing processes as they currently exist.

The resultant tires achieve a shiny tire appearance that is permanently molded to form a skin-like surface. Unlike commercially available additives that are rubbed onto a tire, the present invention's shiny surface lasts. Lubricants used to achieve this purpose simply last a few days before the lubricant either is absorbed by the rubber or washes off. These lubricants actually can age tires by accelerating the migration of antioxidants to the tire's surface. Prolonged use results in the potential of sidewall cracking.

The present invention actually retards the migration of the interior protective chemicals and therefore the rubber actually can be maintained in a fresher, more pliable state improving the crack resistance of the tire's rubber surfaces.

### Summary of the Invention

A tire mold has radially inner surfaces for forming a tread and a pair of sidewalls, the tire mold having at least one entire sidewall surface having a surface finish of less than 15 micro inches, preferably less than 10 micro inches.

A tire produced in a tire mold has at least one sidewall having a surface gloss greater than 10 as measured using a 60-degree gloss reading per ASTM Designation D523-89.

The tire of the present invention has a surface finish formed by a mold that is polished or otherwise smoothed to less than 24 micro inches. The tire surface gloss is greater than 10 when the molding surface is less than 15 micro inches. The resultant tire surface is highly light reflective and the cured surface of the tire has a skin like surface layer that retards the migration of antioxidants from the interior to the surface. Typically tires have a surface roughness that is open or porous which enables antioxidants to have a surface roughness that is open or porous which enables antioxidants to migrate to the surface. The resultant prior art tires quickly appear brownish to rust in color from the original dull black light absorbing color when freshly molded.

The present invention achieves a light reflective surface finish that is so tight that the migration of antioxidants to the surface is retarded. The tires of the present invention stay shiny black in appearance for many months due to this unique molding technique.

### Brief Description of the Drawings

Figure 1 is a partial exploded view of one half of a tire mold of the present invention showing a tread forming crown portion and a pair of annular sidewall plates.
Figure 2 is a view of the annular sidewall plate made according to the present invention.
Figure 3 is a perspective view of a tire made according to the present invention.
Figure 4 is the portion of the tire mold of Figure 1 and the tire of Figure 3 shown in the closed position.
Figure 5 shows a perspective view of a portion of a mold wherein the sidewall has ridges.
Figure 6 is a cross sectional view of a tire sidewall exhibiting such ridges.
Figure 7 is a tire sidewall having ridges.
Figure 8 is a cross-sectional view of the tire of Figure 3.

### Definitions

"Angle of Incidence" means the angle formed by a line from a ray of light falling surface and a plane perpendicular to that surface arising from the point of incidence.

"Axial" and "axially" mean the lines or directions that are parallel to the axis of rotation of the tire.

"Circumferential" means lines or directions extending along the perimeter of the surface of the annular tread perpendicular to the axial direction.

"Light deflection" means that as light strikes a surface, the reflected light is angularly directed relative to the angle of incidence of the light source yielding what appears to be a light absorbing characteristic to an observer who is positioned in general alignment with the angle of incidence.

"Light reflection" means that as light strikes an object, the reflected light is generally aligned with the angle of incidence yielding what appears to be a shiny or reflective characteristic to an observer who is positioned in general alignment with the angle of incidence.

"Radial" and "radially" mean directions radially toward or away from the axis of rotation of the tire.

"Sidewall" means that portion of a tire between the tread and the bead.

"Tread" means that portion of the tire that comes into contact with the road under normal inflation and load.

### Detailed Description of the Invention

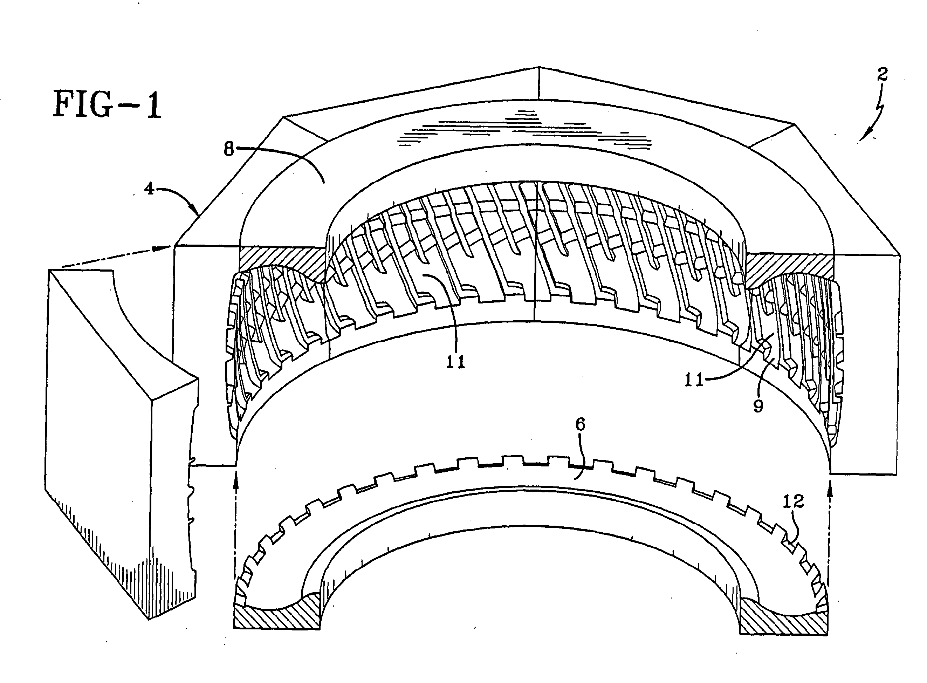

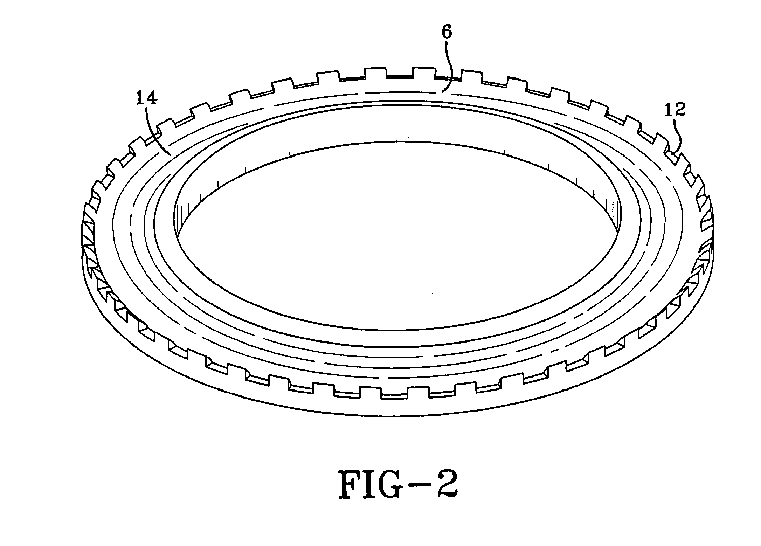

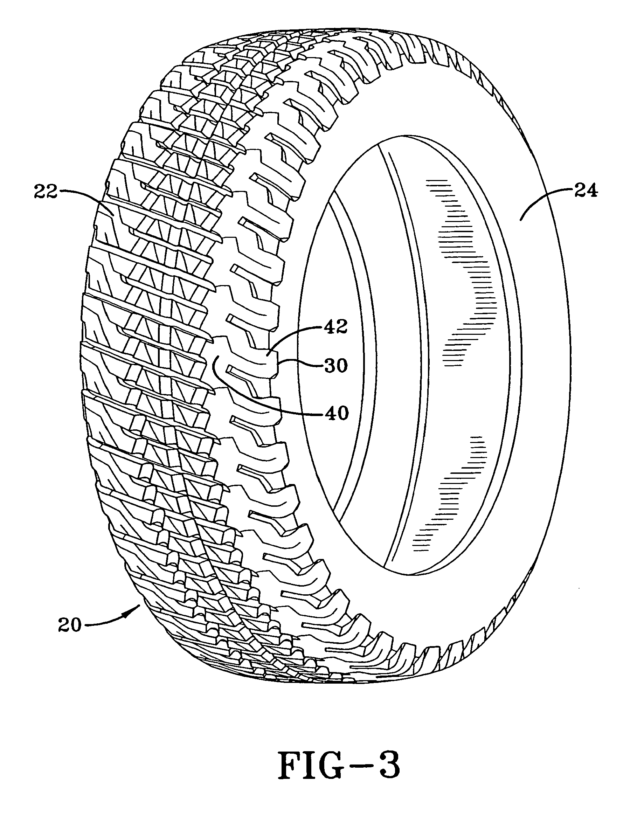

With reference to Figures 1 and 2, there is shown a tire mold 2 having a tread forming crown portion 4 and a pair of annular sidewall rings 6, 8. These portions of the mold 2 form the tread 22 and the tire sidewalls 24 of the tire 20, as illustrated in Figure 3.

With reference to Figure 1 a cross-sectional exploded perspective view of a segment mold 2 according to the invention is shown. The mold 2 when in the open position has the segments 4 expanded radially outwardly and spaced from the lower sidewall forming annular ring 6. The upper sidewall-forming ring 8 is tilted away from the segments 4. In this open position the cured tire 20 can be removed form the mold 2.

To cure a green or uncured tire the segments 4 preferably are moved radially inward abutting the lower sidewall ring 6. Then the green tire 20 is placed in the mold 2 with an inflatable curing bladder (not illustrated) inserted in the air chamber of the tire 20.

The top sidewall forming the upper ring 8 is closed into abutting relation with the segments 4 as shown in Fig. 2.

The tire 20 is then cured by applying heat and pressure to the inside of the mold 2. The curing bladder (not illustrated) is inflated and expands pressing the tire 20 firmly against the tread forming segments 4 and the sidewall forming rings 6, 8.

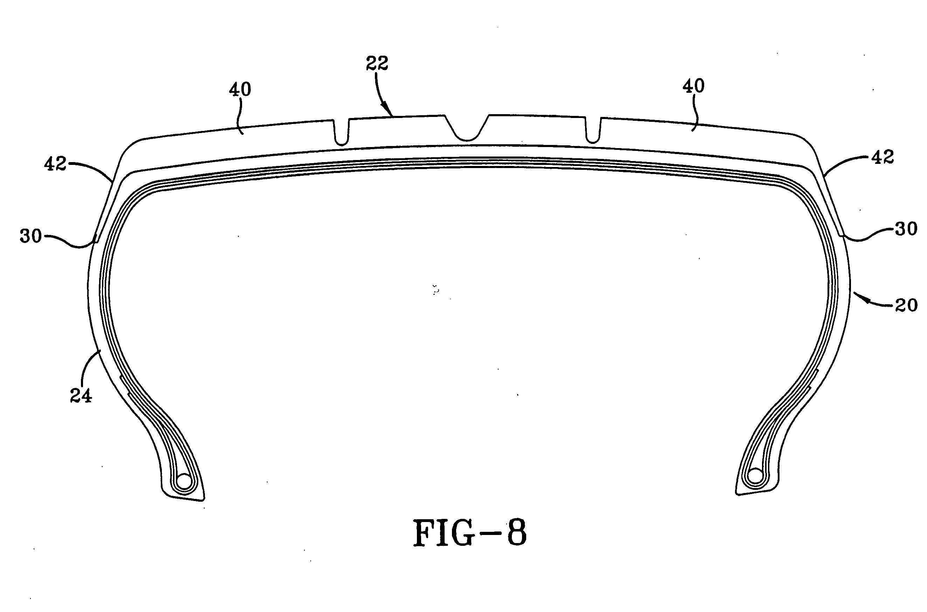

While the sequence of steps described above are generally appreciated by those of ordinary skill in the tire molding art, the segments 4 of the exemplary mold 2 and the upper and lower sidewall forming annular rings 6, 8 are fabricated in such a way that in the process of molding the tire 20 the read 22 is formed with a sidewall 24 having complementary lug extensions 30 circumferentially aligned with the axially outer portion 42 of the traction lugs 40 as illustrated in Figs. 3, 7 and 8 of the drawings of the exemplary tire 20.

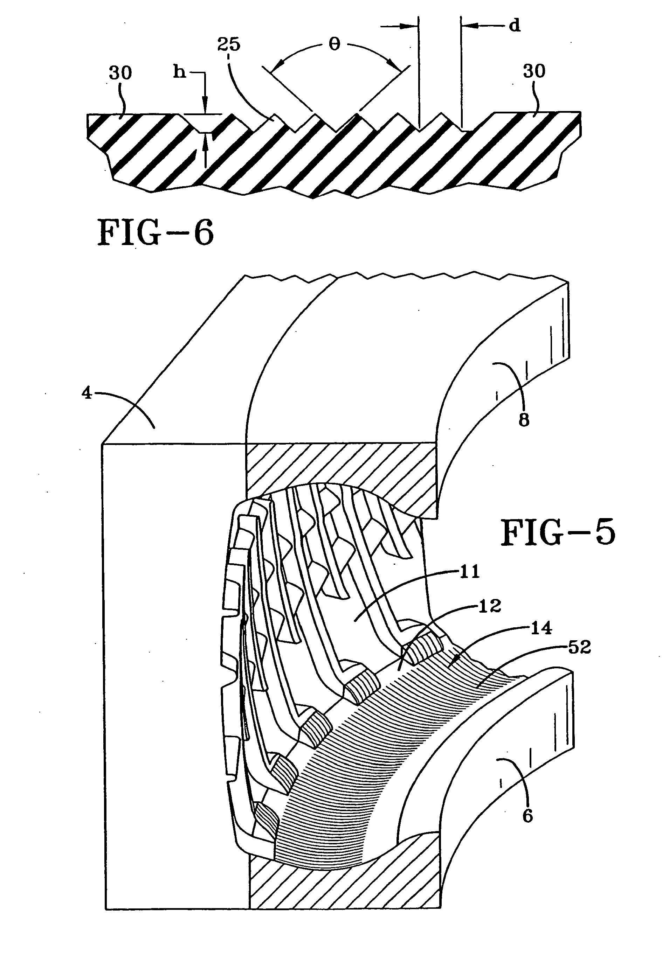

As shown in Figs. 3, 7 and 8, in the example embodiment tire 20 of the invention these sidewall lug extensions 30 extend radially inward a substantial distance into the sidewall indicia band 50 as shown. The ridges 25 forming the radially outer portion of the indicia band 50 may be used at the radially outermost extreme of the annular rings 6, 8 of the mold 2 as shown in Figures 5, 6 and 7.

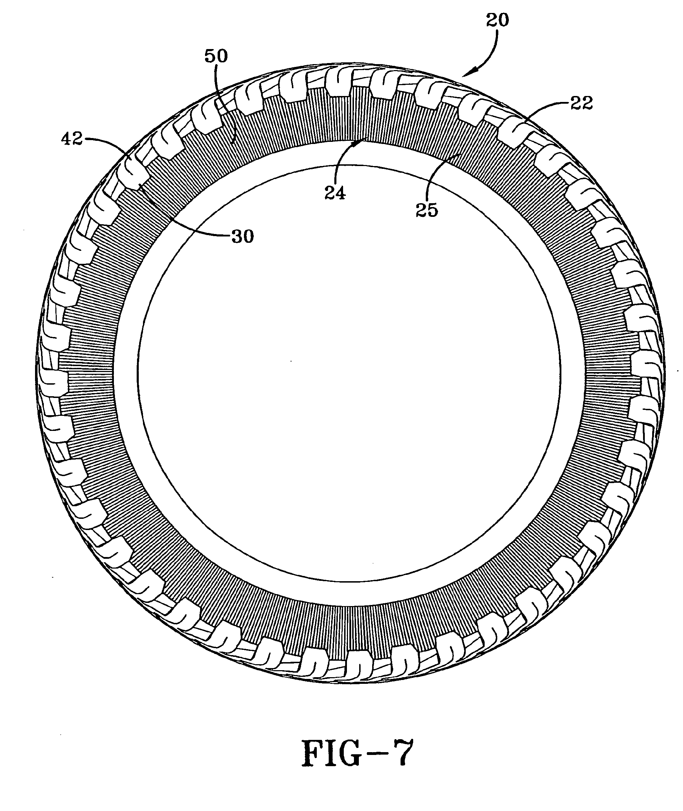

The band 50 of ridges 25 of Figures 6 and 7 as shown can have a radial height (h) and an angle θ between adjacent surfaces. The mold rings 6 and 8 form the ridges 25 with a complementary band of ridges 52 on the sidewall surface 12. The tread elements 40 are formed in the cavities 11 of the tread forming portion of a segment 4, each cavity 11 being defined by ribs 9 that form the tread grooves.

With reference to Figure 2 in the exemplary tire, cutouts 12 are shown to provide lug extensions 30. These features are used primarily on light truck tires. The sidewall forming surface 14 may be smooth with indicia or lettering or may include bands of ridges 25. These ridges 25 ideally should be highly polished as well as the rest of the tire's sidewall as will be discussed.

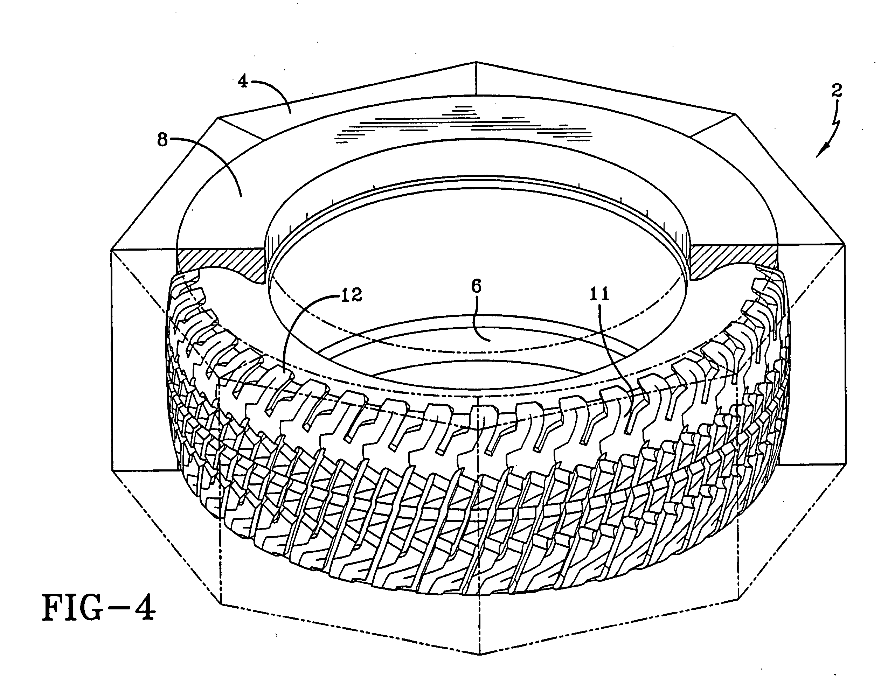

The illustrated mold 2 and the resultant tire 20 are shown in Figure 4 in the closed mold position. These drawings are for example only. It should be understood that any tire curing mold can be utilized in the practice of the present invention.

Typically such molds 2 have these portions of the molds made of aluminum or steel. While the selection of the base material of the mold can be any number of suitable materials, it is believed beneficial that the surfaces, for forming a highly reflective tire finish, should be hard or hardened. Testing indicates that a surface hardness of 64 Rockwell C or greater is sufficiently hard to survive the rigors of tire molding, although lesser hardness may be used.

Heretofore tires have been molded in molds having a surface finish of much greater than 24 micro inches. The resultant tire has a dull black light absorbing surface finish.

The primary reason tires appear uniformly dull is a result of mold fouling. Mold fouling is a residual surface build-up on tire molding surfaces. Sulfur and other chemical residue attach to the molding surface and the surface finish of the tire is limited to the clean lines of the mold.

New molds sometimes have a few shiny tires but after a handful of tires are produced the tires all look uniformly dull. New molds have a surface finish generally for rougher than 24 micro inches. This is mostly due to the limitations on automated surface polishing and machining techniques in making molds.

A study of various commercially available tires was conducted as shown in Table 1 below:

**Table 1**

| 60 Degree Gloss Readings for Goodyear Tires and Competitive Tire | | |
|---|---|---|
| **Tire Description** | **60 Degree Gloss** | **Tire made in** |
| Goodyear Eagle LS | 1.1 | USA |
| Goodyear Eagle F1 | 2.2 | Germany |
| | | |
| Michelin X-One | 2.3 | Spain |
| Michelin Pilot | 3.5 | USA |
| Michelin 4x4 Synchrone | 3.3 | USA |
| Goodrich Comp T/A | 1.1 | USA |
| | | |
| Bridgestone Potenza | 3.0 | Thailand |
| Bridgestone Eager | 1.7 | USA |
| Firestone Affinity | 3.2 | USA |
| | | |
| Pirelli P7 | 3.2 | Italy |

As shown the tires all have a surface gloss reading of less than 5. The Michelin Pilot achieves a 3.5 rating. The tires with the highest rating looked blacker and somewhat shinier. It is important to note these tires were randomly selected or purchased with the results being a very small sample that has no statistical significance other than to show what is typical of such tires.

The inventors decided to see how shiny they could make a tire appear. They attempted to deliberately create a very shiny tire.

In order to make the evaluation meaningful, they achieved a 24 micro inch polished sidewall plate for a tire. The resultant tires had a non-reflective surface gloss reading of less than 5.0 not particularly much better than the best of the tires in Table 1 above.

The inventors then proceeded to evaluate several plating techniques to achieve a higher surface finish on test sidewall rings.

Interestingly chrome plating achieved a very high hardness but the chromium plating simply followed the contour of the underlying sidewall plate. Thus a 24 micro inch polished steel sidewall plate yielded a 24 micro inch chromium surface. The plating when used to a proper thickness achieved no real benefit but simply mirrored the underlying surfaces. Additional layers of chrome run the risk of flaking and brittle fracture and thus were considered less desirable.

The inventors also tested 24 micro inch sidewalls plated or coated with Magnaplate High Mirror Finish (HMF) Magnaplate Nedox SF-2R, Xylan 8840, a Teflon from Whitford. Of all these the Magnaplate HMF appeared to actually smooth the underlying 24 micro inch surface to a higher polish of less than 15 micro inches.

In another trial a steel sidewall plate was highly polished by hand to a finish of 8 micro inch.

In each of the above applications the resultant tires achieved a 60° Gloss reading of greater than 10 with the hand polished 8 micro inch polished plate achieving a shiny tire sidewall having a remarkable 15 to 16 reading on the 60° Gloss reading.

To gain an appreciation of the shiny surface's ability to reflect light, indoor photography of a tire with a flash attachment is commonly done with tires. Most of the flash is absorbed, i.e. not reflected back. The tires of the present invention have such a high level of reflectivity that photographs are shown a bright flash completed blurring the image of the tire. The photographs are like shooting a picture of a mirror with a flash attachment. The bounce back of the light on a 90° angle of attack relative to the tire's surface is virtually impossible.

These tires are so smooth surface the light simply bounces back. What also became quickly apparent was the mold's polished surfaces appeared to sear the rubber surface forming a super tight skin that locked in the chemicals such as antioxidants. The resultant tire when exposed to the environment did not oxidize as a conventional tire. The tires looked shiny and were not dulling in appearance with age. The inventors knew that the shiny surface was very beneficial in that the use of preservatives commonly added to rubber compounds to keep the rubber from cracking or aging was not rapidly migrading out of the tire. This means that the tire should last longer or that the amount of additives could be reduced without harmful consequences.

The reduction of such additives coupled with specifically designed compounds to retard fouling and surface built-up on the molds all seem available now that the benefits of highly shiny tires have been discovered.

Interestingly the shiny tire concept greatly improves the impact of such earlier contrast inventions for the sidewalls as Michel Clementz first attempted in the US-A 5,303,758 earlier discussed.

In order to best protect the mold surfaces applicants found that dry ice cleaning could be conducted without any damage to the polish surfaces. It is further believed beneficial that the surfaces should be hardened to 64 Rockwell C for best results in terms of durability.

Ablative sandblasting and other cleaning techniques preferably should be avoided as that accelerates mold wear at the surface.

The present invention is directly adaptable to any tire and requires no special materials or compound. Although, as noted above, the use of modified materials can be contemplated to enhance the mold life or to reduce the amount of costly additives currently required to preserve the rubber in tires.

It is important to note that for appearance purposes the use of the highly reflective surface is most beneficial to sidewalls. The tread 22 can be provided with a similar highly reflective surface but the usefulness is quickly lost as the tire wears. Nevertheless many may want the entire tire to have this reflective finish for overall appearance in the salesroom. The inventive principles also work for this purpose to give each tire that overall reflective appearance should one desire to do so.

In the above discussion the 60° Gloss readings employed the American Society for Testing and Materials Standard Test Method for Specular Gloss, Designation D-523-89 (Reapproved 1999).

The inventors provide a brief summary of this test method below:

### "3. Terminology

### 3.1 Definitions:

3.1.1 *relative luminous reflectance factor-* the ratio of the luminous flux reflected from a specimen to the luminous flux reflected from a standard surface under the same geometric conditions. For the purpose of measuring specular gloss, the standard surface is polished glass.

*specular gloss* - the relative luminous reflectance factor of a specimen in the mirror direction.

### Summary of Test Method

Measurements are made with 60, 20, or 85° geometry (8,9). The geometry of angles and apertures is chosen so that these procedures may be used as follows:
The 60° geometry is used for intercomparing most specimens and for determining when the 20° geometry may be more applicable.
The 20° geometry is advantageous for comparing specimens having 60° gloss values higher than 70.
The 85° geometry is used for comparing specimens for sheen or near-glazing shininess. It is most frequently applied when specimens have 60° gloss values lower than 10.

### Significance and Use

Gloss is associated with the capacity of a surface to reflect more light in some directions than in others. The directions associated with mirror (or specular) reflection normally have the highest reflectance. Measurements by this test method correlate with visual observations of surface shininess made at roughly the corresponding angles.

Measured gloss ratings by this test method are obtained by comparing the specular reflectance from the specimen to that from a black glass standard. Since specular reflectance depends also on the surface refractive index of the specimen, the measured gloss ratings change as the surface refractive index changes. In obtaining the visual gloss ratings, however, it is customary to compare the specular reflectances of two specimens, having similar surface refractive indices. Since the instrumental ratings are affected more than the visual ratings by changes in surface refractive index, non-agreement between visual and instrumental gloss ratings can occur when high gloss specimen surfaces differing in refractive index are compared.

Other visual aspects of surface appearance, such as distinctness of reflected images, reflection haze, and texture, are frequently involved in the assessment of gloss (1), (6), (7) Test Method E 430 includes techniques for the measurement of both distinctness of image gloss and reflection haze. Test method D 4039 provides an alternative procedure for measuring reflection haze.

Little information about the relation of numerical-to-perceptual intervals of specular gloss has been published. However, in many applications the gloss scales of this test method have provided discrimination between coated specimens that have agreed well with visual discriminations of gloss (10).

When specimens differing widely in perceived gloss or color, or both, are compared, nonlinearity may be encountered in the relationship between visual gloss difference ratings and instrumental gloss reading differences."

## Claims

1. A tire mold having a radially inner surface for forming a tread (22) and a pair of sidewalls (24), wherein at least one entire sidewall surface has a surface finish of less than 0.381 microns (15 micro inches).

2. The tire mold of claim 1, wherein the at least one sidewall surface has a surface finish of less than 0.254 microns (10 micro inches).

3. The tire mold of claim 2, wherein the at least one sidewall surface has an 0.2032 microns (8 micro inch) polish.

4. The tire mold of any of the preceding claims wherein the at least one sidewall surfache has a hardness of at least 64 Rockwell C.

5. A tire cured in a mold having a tread (22) and a pair of sidewalls (24), the tire (20) being **characterized by** at least one sidewall (24) having a surface gloss reading of greater than 10, as measured using a 60° gloss reading per ASTM designation D 523-89.

6. The tire of claim 5, wherein the tire (20) has been molded in a tire mold (2) having a surface finish of less than 0.6069 microns (24 micro inches), especially less than 0.381 microns (15 micro inches), and the surface finish of the tire (20) is highly light reflective.

7. The tire of claim 5 or 6, wherein the at least one sidewall (24) having a gloss reading of greater than 10 has a surface skin layer that retards migration of antioxidation and is shiny black in appearance.

## Patentansprüche

1. Ein Reifenformwerkzeug mit einer radial inneren Oberfläche zum Formen einer Lauffläche (22) und eines Paars von Seitenwänden (24), wobei wenigstens eine ganze Seitenwandoberfläche ein Oberflächenfinish von weniger als 0,381 Mikron (15 Mikrozoll) hat.

2. Das Reifenformwerkzeug von Anspruch 1, wobei die wenigstens eine Seitenwandoberfläche ein Oberflächenfinish von weniger als 0,254 Mikron (10 Mikrozoll) hat.

3. Das Reifenformwerkzeug von Anspruch 2, wobei die wenigstens eine Seitenwandoberfläche eine 0,2032 Mikron (8 Mikrozoll)-Polierung hat.

4. Das Reifenformwerkzeug von einem der vorhergehenden Ansprüche, wobei die wenigstens eine Seitenwandoberfläche eine Härte von wenigstens 64 Rockwell C hat.

5. Ein in einem Formwerkzeug vulkanisierter Reifen mit einer Lauffläche (22) und einem Paar Seitenwänden (24), wobei der Reifen (20) **dadurch gekennzeichnet ist, dass** wenigstens eine Seitenwand (24) einen Oberflächenglanzmesswert von größer als 10 hat, gemessen unter Verwendung eines 60°-Glanzmesswerts per ASTM-Bezeichnung D 523-89.

6. Der Reifen von Anspruch 5, wobei der Reifen (20) in einem Reifenformwerkzeug (2) mit einem Oberflächenfinish von weniger als 0,6069 Mikron (24 Mikrozoll), spezieller weniger als 0,381 Mikron (15 Mikrozoll), geformt worden ist und das Oberflächenfinish des Reifens (20) stark lichtreflektierend ist.

7. Der Reifen von Anspruch 5 oder 6, wobei die wenigstens eine Seitenwand (24), die einen Glanzmesswert von größer als 10 hat, eine Oberflächenhautschicht aufweist, die die Wanderung von Antioxidation hemmt und ein glänzend schwarzes Aussehen hat.

## Revendications

1. Moule pour bandage pneumatique possédant une surface interne en direction radiale pour former une bande de roulement (22) et une paire de flancs (24), dans lequel au moins une surface de flanc totale possède un fini inférieur à 0,381 micron (15 micropouces).

2. Bandage pneumatique selon la revendication 1, dans lequel au moins une surface de flanc possède un fini inférieur à 0,254 micron (10 micropouces).

3. Bandage pneumatique selon la revendication 2, dans lequel au moins une surface de flanc possède un poli de 0,2032 micron (8 micropouces).

4. Bandage pneumatique selon l'une quelconque des revendications précédentes, dans lequel ladite au moins une surface de flanc possède une dureté d'au moins 64 Rockwell C.

5. Bandage pneumatique vulcanisé dans un moule, possédant une bande de roulement (22) et une paire de flancs (24), le bandage pneumatique (20) étant **caractérisé par** le fait de posséder au moins un flanc (24) possédant un indice de brillance supérieur à 10, tel qu'on le mesure en utilisant un indice de brillance de 60° via la norme ASTM D 523-89.

6. Bandage pneumatique selon la revendication 5, dans lequel le bandage pneumatique (20) est moulé dans un moule pour bandage pneumatique (2) possédant un fini inférieur à 0,6069 micron (24 micropouces), en particulier inférieur à 0,381 micron (15 micropouces), le fini du bandage pneumatique (20) étant très réfléchissant.

7. Bandage pneumatique selon la revendication 5 ou 6, dans lequel ledit au moins un flanc (24) dont l' indice de brillance est supérieur à 10 possède une pellicule superficielle qui retarde la migration des antioxydants et qui présente un aspect noir brillant.
